# EUROPEAN PATENT APPLICATION

(11) **EP 4 559 349 A1**
(43) Date of publication of application: **28.05.2025**
(21) Application number: 24198088.7
(22) Date of filing: 03.09.2024
(51) Int. Cl.: A44B 11/25, A44B 11/26, B60R 22/02

(54) **THREE-WAY SAFETY BUCKLE**

(30) Priority: 07.09.2023 DK PA202370463
(71) Applicant: Copenhagen Trade ApS, 2650 Hvidovre (DK)
(72) Inventor: LARNER, Thomas, 2100 København Ø (DK)
(74) Representative: Chas. Hude A/S

(57) **Abstract**

A three-way safety buckle with two-step activation comprises a female housing equipped with a central release button, two side safety buttons, and two openings. Additionally, it includes a first and a second male attachment element designed for insertion into the two openings of the female housing and adapted for being releasable connected with the female housing. The release button and safety buttons are operatively adapted to release the first and second male attachment elements from connection with the female housing when the release button is activated following, preferably approximately simultaneous, activation of the safety buttons, resulting in a two-step activation to release the male attachment elements.

## Description

### Field of the invention

The present disclosure relates to the field of buckles, preferably for use with a child restraint harness in child car seats, booster seats, airplanes, strollers, cradles and/or high-chairs, especially to a three-way safety buckle and a method for opening said buckle.

### Background of the invention

Childcare workers routinely open and close buckles throughout the day, but existing products on the market often lead to hand fatigue and discomfort. Recognizing this, there emerged a pressing need to design a buckle that prioritizes ease of use while maintaining robust durability and child-proof security.

A parallel, yet equally vital, objective was to create an aesthetically striking buckle, one that would effortlessly catch the eye in today's market and facilitate easy branding. An unforeseen advantage of this novel aesthetic design is the enhanced ergonomic quality, as the larger buckle size provides a more comfortable grip. However, most safety buckles available today can be released with a single action, which presents a potential safety concern.

In particular, this type of safety buckle can be inadvertently released, for instance, by a younger sibling of the restrained child, potentially compromising the restrained child's safety. Thus, the need arises for a safety buckle that cannot be disengaged with a single, uncomplicated maneuver, yet remains user-friendly and efficient.

Childcare professionals frequently interact with child restraint harnesses equipped with buckles that, in current market iterations, induce hand fatigue and discomfort. This invention addresses this challenge by introducing a buckle that not only enhances user comfort but also elevates safety standards by making it difficult for a child to accidentally release.

A three-way buckle is a type of fastening device used in various applications, such as child restraint harnesses, seat belts, backpacks, and other safety equipment. It is designed to securely hold two ends of a strap or webbing together while allowing for easy and controlled release when needed. The "three-way" refers to the three components or mechanisms involved in the buckle's operation.

The term "non-inertial release safety restraint belt buckle" denotes a fastening device integral to seat belts or safety harnesses, employed as a safety mechanism. Importantly, the "non-inertial release" aspect signifies that this buckle does not unlock due to sudden motion or acceleration; rather, it necessitates a deliberate action for release.

This category of buckles finds common application in safety systems such as automobile seat belts or industrial safety harnesses, where it is imperative to have a secure and reliable fastening that resists unintentional opening during regular use. Its design ensures that the wearer remains securely fastened and restrained throughout use, requiring a deliberate action to unlock.

As a result, the primary objective of this invention is to introduce a three-way buckle for safety belts, specifically designed for child safety seats in motor vehicles and similar applications. This buckle is engineered to prevent accidental, involuntary release during violent impacts, prohibit improper engagement of the locking mechanism with only part of the belt when both parts are not fully inserted, and eliminate the possibility of faulty closure if only one of the parts is inserted into the buckle.

Additionally, the invention aims for a simplified structure, safe and dependable operation, and a cost-effective solution.

### Summary of the invention

According to a first aspect of the invention, the objects laid out in the background section may be achieved by a three-way safety buckle with two-step activation comprising;
- a female housing comprising;
   a release button,
   two safety buttons, and
   two openings,
- a first and a second male attachment element adapted to be inserted into the two openings of the female housing, and adapted for being releasable connected with the female housing;
wherein said release button and said safety buttons are operatively adapted to release said first and second male attachment elements from connection with the female housing, so that when firstly said safety buttons are activated to allow activation of the release button, which is then activated to release said male attachment elements, so that the safety buckle is changed from a locked state to an open state.

In an alternative embodiment there is provided a three-way safety buckle with two-step activation comprising;
- a female housing comprising;
   a release button,
   two safety buttons and
   two openings,
- a first and a second male attachment element adapted to be inserted into the two openings of the female housing, and adapted for being releasable connected with the female housing;
wherein said release button and said safety buttons are operatively adapted to release said first and second male attachment elements from connection with the female housing, when said release button is activated following, preferably approximately simultaneous, activation of said safety buttons so as to perform a two-step activation to release said male attachment elements.

The three-way safety buckle employs a unique two-step activation mechanism. It consists of a female housing with a release button and two safety buttons. These buttons work in tandem with two male attachment elements that can be inserted into the female housing. The release button, when activated, which can only happen after activation of the safety buttons, releases the male attachment elements from the housing, ensuring a secure two-step activation process.

The unique two-step activation mechanism enhances safety. Requiring two-step activation of safety buttons and the release button makes it challenging for a child to open, ensuring and improving childproof security.

In an embodiment the release button is located centrally on said housing, preferably on a front side, to operably engage with the attachment unit within the housing in the assembled position.

The release button's central positioning on the housing's front side ensures optimal engagement, enhancing user comfort and making it easy to locate and operate, especially in low-light conditions or emergencies. This ergonomic placement enhances user comfort and ease of operation.

In an embodiment the release button and/or the safety buttons are of the same color, preferably red, and a body of the housing is of a different color, preferably black.

In an embodiment the release button has one color, preferably red, and the housing (comprising the safety buttons) is of a different color, preferably black.

In an embodiment the release button is positioned on the front side of the buckle housing.

In another embodiment the release button is arranged centrally on the housing, preferably on the front side of the housing.

In an embodiment the two safety buttons are positioned on opposite sides of said housing, preferably on sides of the housing.

In an embodiment the three-way safety buckle in a locked state is adapted to have an approximately ellipsoid shape, preferably an oblate spheroid shape.

This design not only aids in aesthetics but also contributes to its functional attributes. The buckle's approximately ellipsoid and/or oblate spheroid shape, while visually appealing, also contributes to its safety. This shape reduces sharp edges, minimizing the risk of injury in case of impact.

In an embodiment the female housing comprises a main belt slot adapted for receiving belt webbing. The main belt slot is preferably arranged in the body part of the housing.

In an embodiment the first attachment element comprises a secondary belt slot adapted to receive belt webbing.

In an embodiment the second attachment element comprises a third belt slot adapted to receive belt webbing.

In an embodiment the female housing includes both a main belt slot for accommodating belt webbing, while the male attachment elements feature secondary and third belt slots.

These integrated belt slots facilitate easy and/or secure fastening and restraint.

A wide range of different types of webbing or belts used in various applications where secure fastening and safety are paramount may be used in relation to the safety buckle according to the invention. The choice of webbing depends on the specific use case and safety requirements of the application.

In an embodiment the webbing for use with the buckle is preferably approximately 25 mm in width. In another embodiment the webbing for use with the buckle is preferably approximately 40 mm in width.

Integrated belt slots in the female housing and male attachment elements simplify the fastening of belt webbing, ensuring a secure and proper fit, thereby enhancing safety during use.

In an embodiment the buckle is adapted to require use of two hands to open the buckle from the locked/assembled state.

In an embodiment the buckle is adapted to require separate activation of the release button and the safety buttons to open the buckle from the locked/assembled state.

Preferably the safety buttons must be activated first to allow for activation of the release button. It may be such, that the buckle is designed so that it is the other way around. In this case, the release button must be activated firstly to allow for activation of the safety buttons, whereafter the buckle is opened.

It is important to note that within the context of this description, the terms "locked" and "assembled" are used interchangeably to refer to the state of the buckle. When the buckle is correctly assembled, it will inherently be in the locked state, necessitating a two-step activation process for release. Conversely, the terms "open" and "unassembled" are employed when the buckle transitions from the locked state, releasing the male attachment elements from the housing. This action results in the buckle assuming an unassembled state, which is synonymous with being open.

Requiring two-handed and/or two-step operation adds an extra layer of safety, making it significantly more challenging for a child to release. This feature ensures that only individuals with the coordination and strength to use both hands can open the buckle.

In an embodiment the force required to active the release button is more than 10 N, preferably more than 20 N, more preferred more than 30 N.

In an embodiment the force required to active the release button is approximately 35 N.

In an embodiment the force required to active the safety buttons is more than 5 N, preferably more than 10 N, more preferred more than 20 N.

In an embodiment the force required to active the safety buttons is approximately 25 N.

The specified force requirements for button activation enhance safety. The relatively high force needed for release button activation and/or safety button activation ensures that the buckle cannot be accidentally opened, even under force or impact.

In an embodiment the first male attachment element comprises a spring element for releasably engaging with an attachment element arranged inside the housing, when the buckle is in a locked state.

In an embodiment when the safety button is pressed, the attachment element is moved out of engagement with the spring element, so that the activation of the release button allows the first male attachment element to be released from the housing.

In an embodiment when the release button and/or the release buttons is/are pressed, the attachment element is moved out of engagement with the spring element, so that the activation of the release button allows the first male attachment element to be released from the housing.

In an embodiment said attachment element is connected to the safety button and/or the release button, so that when the buckle is in the locked state, the attachment element engages with the spring element of the first male attachment element inside the housing.

The spring element and/or the attachment element is adapted to detachably retain the first male attachment element in the housing, when said attachment element is at least partly inserted into the housing.

The attachment element is inserted through the opening of the housing.

In an embodiment the second male attachment element comprises a spring element for releasably engaging with an attachment element arranged inside the housing, when the buckle is in the locked state.

In an embodiment when the safety button(s) and/or the release button is/are pressed, the attachment element is moved out of engagement with the spring element, so that the activation of the release button allows the first male attachment element to be released from the housing.

In an embodiment said attachment element is connected to the safety button and/or safety buttons and/or the release button, so that when the buckle is in the locked state, the attachment element engages with the spring element of the second male attachment element.

The inclusion of spring elements in each male attachment element ensures a secure connection when in the locked state. This eliminates the possibility of accidental disengagement, providing peace of mind regarding the buckle's reliability.

In an embodiment the first male attachment element comprises a main spring element for releasably engaging with the release button.

In an embodiment the second male attachment element comprises a main spring element for releasably engaging with the release button.

The assembly of the buckle may be viewed as a snap coupling mechanism between the male attachment elements and the housing. The snap coupling mechanism simplifies assembly and disassembly, reducing the complexity of maintenance or replacement. This feature makes it convenient for users to manage and maintain the buckle.

According to a **second aspect** of the invention a method of opening a three-way safety buckle is provided, the method comprising;
- providing a three-way safety buckle 1 according to any of the preceding claims, said buckle being in the assembled locked state,
- activating the two safety buttons 22, 23, preferably by pressing said buttons, more preferred by pressing said buttons approximately simultaneously, with a first hand of a user,
- maintaining the activation of the safety buttons whilst
- activating the central release button 21, preferably pressing said button, with a second hand, different from the first hand, of a user,
so as to release the first and the second male attachment elements 31, 32 from the female housing 2, whereby the buckle 1 is changed to the open state.

Within the framework of this description, it's important to note that the term "user" can refer to an individual operating the buckle or a group of individuals. Similarly, when we mention one hand of the user, it's essential to recognize that the other hand could belong to the same individual or a different individual within the user group. This flexibility in the interpretation accommodates both single-user scenarios and situations where multiple individuals may be involved in operating the buckle.

In an alternative embodiment a method of opening a three-way safety buckle is provided, the method comprising;
of opening a three-way safety buckle comprising;
   - providing a three-way safety buckle 1 according to any of the preceding claims, said buckle being in the assembled locked state,
   - activating the two side safety buttons 22, 23, preferably by pressing said buttons, more preferred by pressing said buttons approximately simultaneously, with a first hand of a user,
   - maintaining the activation of the side safety buttons whilst
   - activating the central release button 21, preferably pressing said button, with a second hand, different from the first hand, of a user,
so as to release the first and the second male attachment elements 31, 32 from the female housing 2, whereby the buckle 1 is changed to the open state.

The assembly of the buckle can be aptly likened to a snap coupling mechanism, where the male attachment elements seamlessly engage with the housing. This mechanism is ingeniously designed to ensure a secure and straightforward connection while maintaining robust stability.

During assembly, the male attachment elements, with their specialized features including spring elements, are purposefully designed to easily insert into the corresponding openings in the housing. As they are inserted, the spring elements within the male attachment elements come into play. These springs engage with specific components integrated into the housing, creating a secure attachment.

This attachment is intentionally crafted to be both robust and reliable, ensuring that the buckle remains firmly assembled during use, even under challenging conditions. It guarantees that the buckle can withstand forces and impacts without unintentional disassembly.

To transition the buckle to the open state or disassemble it, users must apply a deliberate force to the safety buttons. This force overcomes the engagement of the spring elements, allowing the release button to be activated by applying a force to said button, thus allowing the male attachment elements to be smoothly released from the housing.

The snap coupling mechanism not only ensures a strong and dependable connection but also offers user-friendliness. It allows users to readily engage and disengage the buckle with ease, making it a practical choice for a wide range of applications.

Importantly, this mechanism enhances the safety of the buckle. The robust connection it provides minimizes the risk of accidental disassembly, particularly in critical situations where the reliability of the buckle is paramount.

In conclusion, the snap coupling mechanism is a pivotal feature of the buckle's assembly, combining ease of use with security, and making it suitable for applications where a reliable, user-friendly, and safety-focused fastening mechanism is indispensable.

Furthermore, the method claims for opening the three-way safety buckle encompass a host of compelling advantages.

First and foremost, the two-step activation method stands out for its exceptional safety enhancement. By requiring a deliberate two-step process, it significantly bolsters security, making it substantially more challenging for a child to inadvertently release the buckle. This added layer of security substantially diminishes the risk of unauthorized access.

Moreover, this method affords users an exceptional degree of control over the release process. To unlock the buckle, users must intentionally engage firstly the safety buttons and afterwards the release button. This meticulous process ensures that the buckle only opens when it is explicitly intended to do so.

Additionally, the two-step procedure plays a pivotal role in reducing the likelihood of accidental or inadvertent releases, particularly in scenarios where external forces or movements could otherwise result in unintended unbuckling.

This method's versatility shines through in its adaptability for various usage scenarios. Whether it's a single user or multiple users participating in the process, the method accommodates diverse applications and situations with ease.

Despite its robust security features, this method remains incredibly user-friendly. It provides a straightforward and intuitive means of releasing the buckle precisely when needed, striking an optimal balance between security and usability.

In critical emergencies, this method assures users that the buckle can be swiftly and reliably opened as required. The deliberate two-step action offers a heightened level of confidence in high-stress situations, where every moment counts.

Notably, this method finds particular advantage in child restraint systems. Its intricately designed two-step process effectively prevents children from accidentally opening the buckle, significantly enhancing their safety during travel.

Above all, users can place unwavering trust in this method, knowing that the buckle will steadfastly remain securely fastened until they consciously choose to initiate the opening. This peace of mind holds particular significance in applications where safety is of paramount concern.

In summary, this innovative three-way safety buckle is designed with a focus on safety, security, and user-friendliness. Each aspect and embodiment offer specific advantages that collectively contribute to its suitability for a wide range of applications where secure fastening and safety are paramount.

Any one or more of the above embodiments or preferred features can be combined with any one or more of the above aspects.

It is to be understood that both the foregoing general description and the following detailed description are examples and explanatory and are not restrictive of the invention, as claimed. It should be understood that the various embodiments are not limited to the arrangements and instrumentality shown in the drawings. It should also be understood that the embodiments may be combined, or that other embodiments may be utilized and that structural changes, unless so claimed, may be made without departing from the scope of the various embodiments of the present invention. The following detailed description is, therefore, not to be taken in a limiting sense.

### Brief description of the drawings

The invention will be described in more detail below by means of nonlimiting examples of embodiments and with reference to the schematic drawings, in which:
Fig. 1a illustrates a schematic example of a front view of the safety buckle 1 according to the invention in an assembled, locked state.
Fig. 1b illustrates a schematic example of a bottom view of the buckle 1 in the locked state.
Fig. 1c illustrates a schematic example of a top view of the buckle 1 in the locked state.
Fig. 1d illustrates a schematic example of a side view of the buckle 1 in the locked state.
Fig. 1e illustrates a schematic example of a perspective front view of the buckle 1 in the locked state.
Fig. 1f illustrates a schematic example of a perspective back view of the buckle 1 in the locked state.
Fig. 2 illustrates an exploded front view of the safety buckle according to the invention.
Fig. 3a illustrates a perspective view of a body part 20 of the housing in itself.
Fig. 3b illustrates a back view of said body part 20 of the housing.
Fig. 4a illustrates a perspective top view of the release button 21 (removed from the housing).

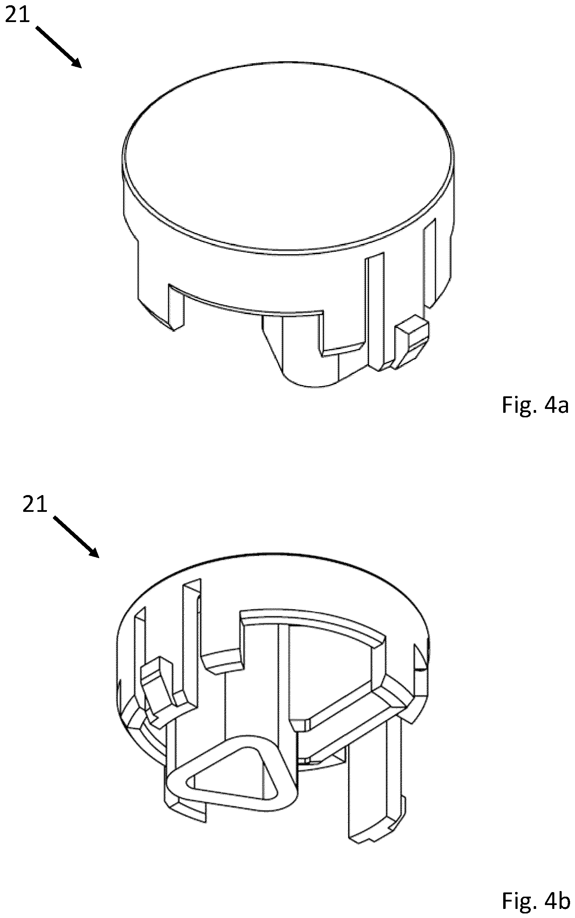

Fig. 4a illustrates a perspective bottom view of the release button 21 (removed from the housing).

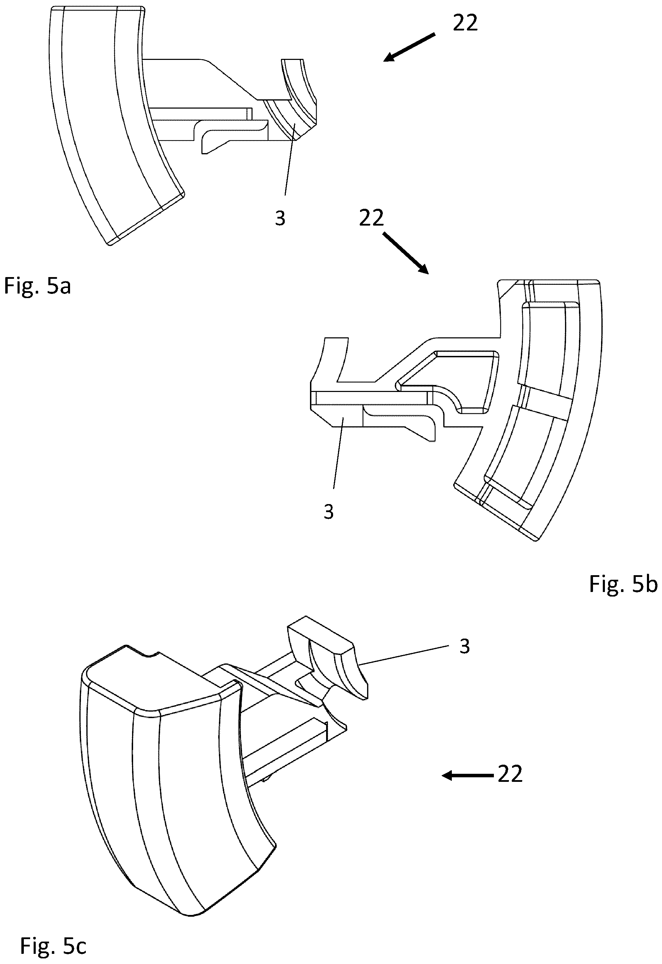

Fig. 5a-c illustrates different view of the left side button 22 (removed from the housing body 20).

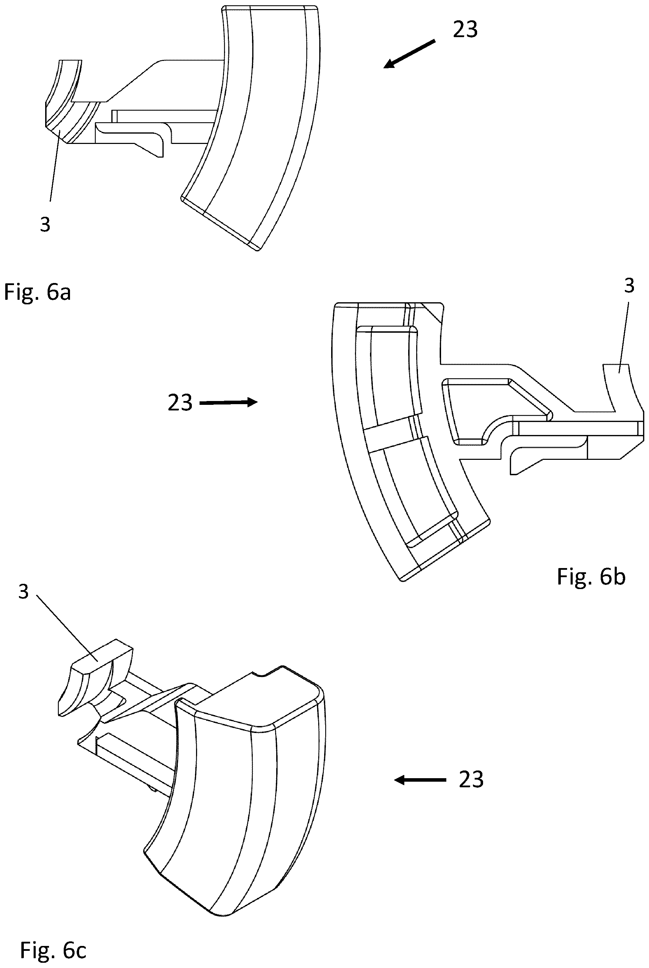

Fig. 6a-c illustrates different view of the right side button 23 (removed from the housing body 20).

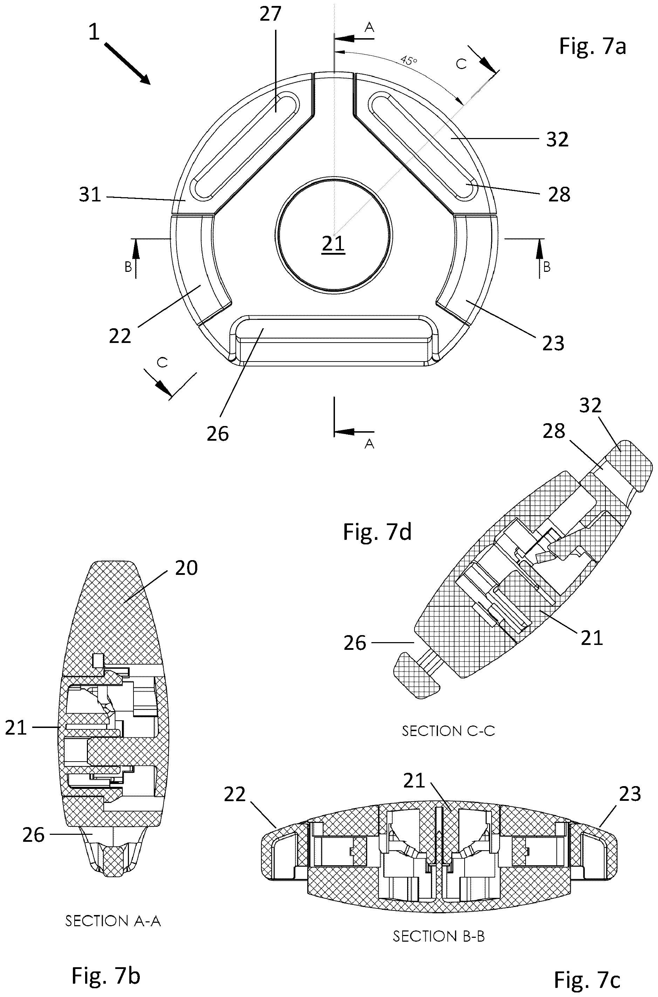

Fig. 7a-d illustrates a front vies of the safety buckle 1 according to the invention in a closed state and three different cross-sectional views at different planes through said buckle 1.

### Detailed description of the invention

In the following, embodiments of the invention will be described in further detail. Each specific variation of the features can be applied to other embodiments of the invention unless specifically stated otherwise. Note that for illustrative purposes the dimensions, especially thickness and/or size of the different elements shown may be exaggerated.

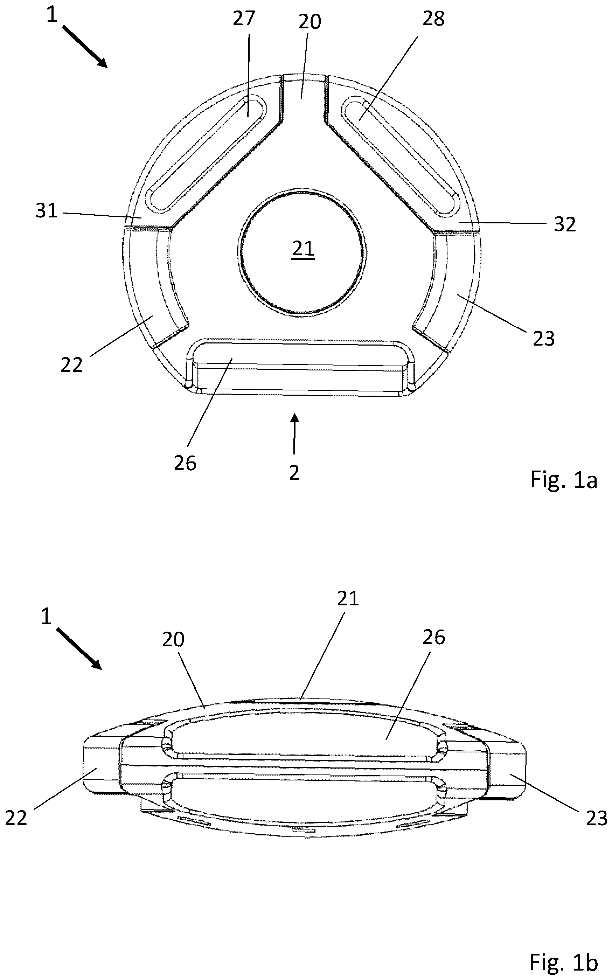

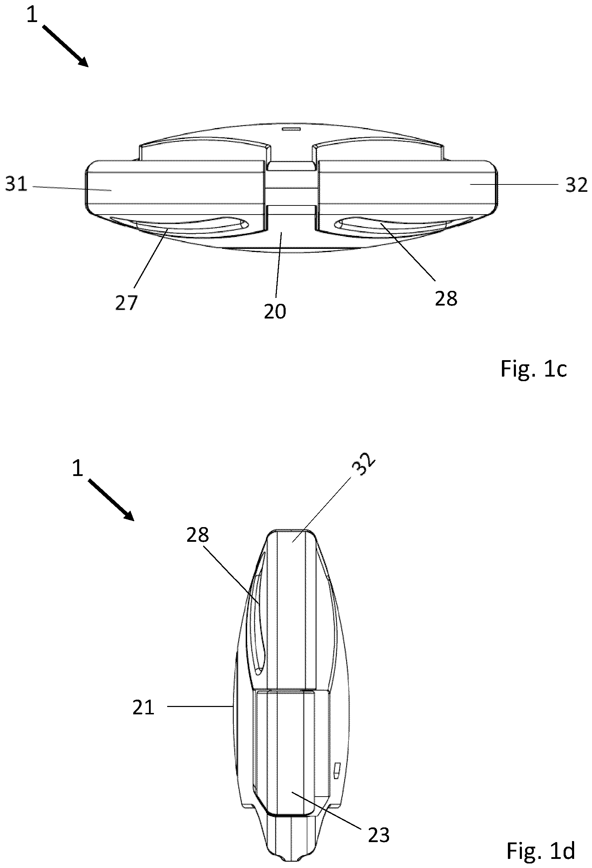

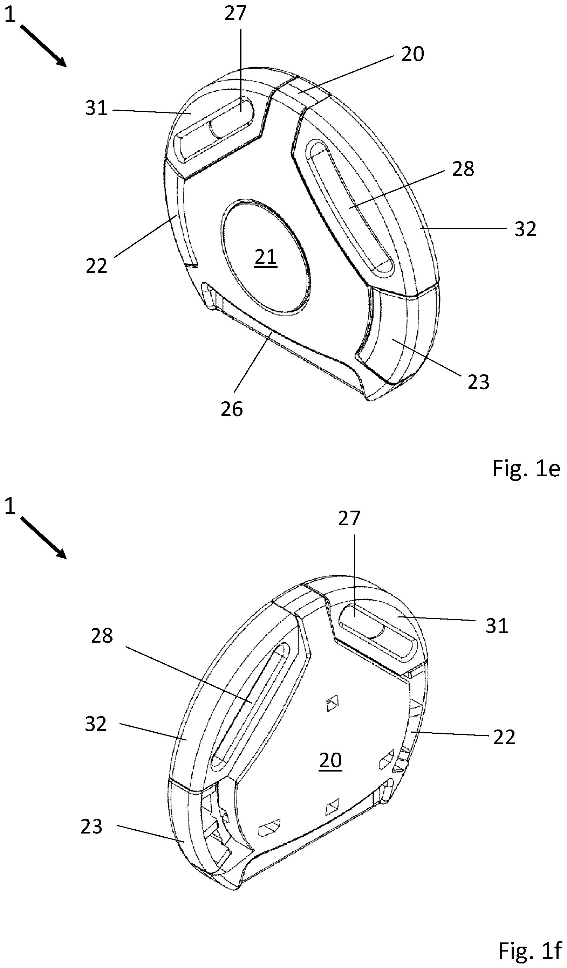

Figures 1a-e provide various angles and views of the three-way safety buckle 1 according to the present invention. These visuals offer a detailed look at the buckle's design and how it functions, as described below.

At the core of this configuration lies the female housing (noted as '2' in the image), housing essential components. Positioned prominently at the center of the housing is the central release button ('21'), a pivotal element in the buckle's operation.

Flanking this release button are two side safety buttons ('22' and '23'), symmetrically placed to either side of the housing. These safety buttons are strategically designed for ergonomic access and user comfort, facilitating smooth operation.

Two openings ('24' and '25') are clearly visible within the female housing, providing entry points for the male attachment elements.

The two male attachment elements ('31' and '32') are designed to be inserted into the openings of the female housing. These elements are equipped with spring mechanisms ('33' and '34') that interact with the internal components of the housing.

The primary button, positioned centrally on the housing's front side, acts as the central release button ('21'). It plays a pivotal role in releasing the male attachment elements from their connection with the female housing.

To release the buckle, users must follow a two-step activation process. Initially, they press the central release button ('21') while simultaneously pressing the side safety buttons ('22' and '23'). This deliberate and coordinated action unlocks the male attachment elements ('31' and '32') from their connection with the female housing, allowing the buckle to open securely.

This intricate arrangement ensures both enhanced safety and user control, as it necessitates a precise sequence of actions to unlock the buckle, reducing the likelihood of accidental releases. The image offers a clear visual representation of how these elements are positioned, interact, and relate within the assembled state of the three-way safety buckle.

The buckle housing is the main housing that holds the components together and provides structural support. It typically has openings or slots where the webbing or straps can be inserted and secured.

The two safety buttons positioned on opposite sides of the buckle housing. These buttons play a crucial role in unlocking the buckle. When pressed simultaneously, they disengage the locking mechanism and allow for the release of the strap or webbing.

The release button is located in the center of the buckle housing. It serves as the primary release mechanism. When the safety buttons are pressed, they create internal clearances that enable the release button to be pressed down, unlocking the buckle, and allowing for the separation of the strap or webbing.

The combination of the safety buttons and release button ensures a two-step unlocking process, adding an extra layer of security to prevent accidental release. This design feature helps prevent children from easily opening the buckle while still providing ease of use for adults.

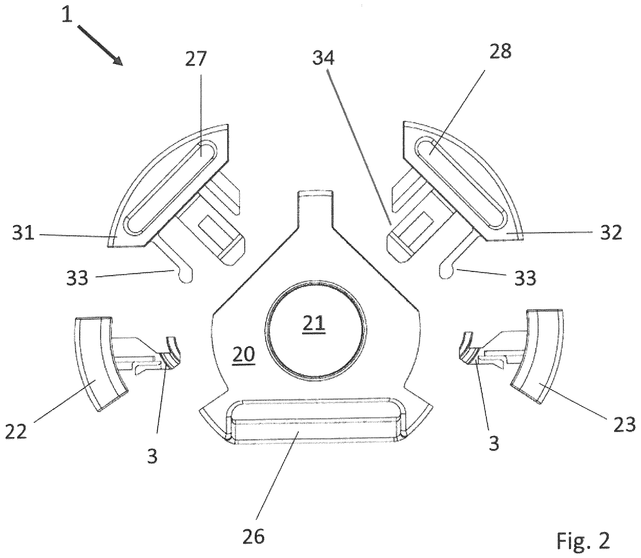

**Turning to** **fig. 2** which illustrates an exploded front view of the safety buckle according to the invention.

In this frontal perspective of the exploded view of the three-way safety buckle, we gain insight into the intricate arrangement of its internal components. Notably, this depiction captures the buckle in an exploded view, distinct from the fully unlocked state. Noteworthy is the presentation of the side safety buttons ('22' and '23'), typically housed within the female housing ('2'), in an exploded configuration, highlighting the internal mechanisms responsible for the buckle's secure functionality.

Central to this configuration is the central release button ('21'), positioned at the core of the female housing. This button plays a pivotal role in releasing the buckle.

Flanking the female housing are the two side safety buttons ('22' and '23'), normally situated within the housing but displayed here in an exploded state. This presentation offers a glimpse into the intricate inner workings of the buckle.

Within the female housing, two openings ('24' and '25') serve as entry points for the male attachment elements ('31' and '32'). While these openings are typically enclosed in the fully assembled buckle, their exposure in this exploded view sheds light on the release mechanism's inner workings.

The male attachment elements ('31' and '32') are engineered to fit snugly into the openings of the female housing. In this exploded view, their separation from the housing provides a clear illustration of the release mechanism's design.

Of particular significance are the spring elements ('33' and '34'), integrated into each male attachment element ('31' and '32'). These spring elements are instrumental in the buckle's functionality. Specifically, they contribute to the reliable engagement and disengagement of the male attachment elements with the internal components of the housing.

This exploded view of the buckle delivers a comprehensive visual representation of the positioning and interaction of these components within the assembly, including the vital role played by the spring elements. Importantly, it emphasizes that the side safety buttons are also in an exploded state, a departure from their typical configuration when the buckle is fully open. This portrayal underscores the precision engineering and the sophisticated internal mechanisms that ensure the buckle's secure and deliberate operation.

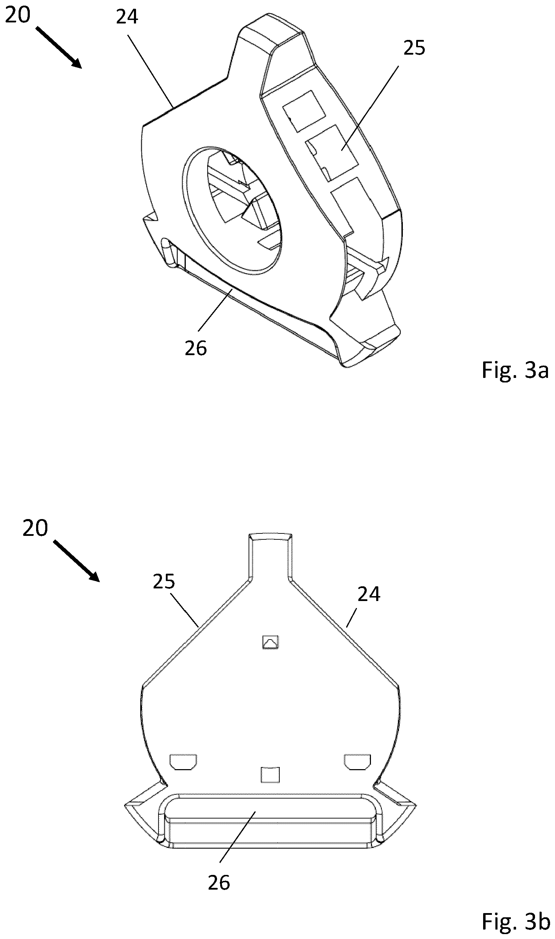

Figs. 3 shows different views of the body part 20. The body part 20 is comprised in the housing 2. The openings 24, 25 are arranged in the body part 20 and are adapted to receive the male attachment elements.

The release button 21 is shown in figs. 4a and 4b. The release button preferably comprises a circular front surface.

The back side of the release button 21 comprises means for engagement with the safety buttons and/or attachment elements.

Different views of the left and right safety buttons 22, 23 are shown on figs. 5a-c and figs. 6a-c. Each safety button comprises an attachment element 3.

Turning to fig. 7a which illustrates a front vies of the buckle 1 according to the invention in a closed state. Figs. 7b-d shows three different cross-sectional views at different planes through said buckle to illustrate the engagement of the different parts of the buckle in the closed state.

In a preferred embodiment it is so that without pressing in the safety buttons 22, 23, the release button 21 stays locked in place and the buckle 1 cannot be opened.

Inside the housing 2, specifically inside the housing body 20, the release button 21 is locked in place by the safety button locking blocks. When the safety buttons are pressed in, the internal blocks that keep the release button locked move out of the way and a clearance is created. The release button can now be pressed in as it is now unlocked. The clips release and all the buttons (release and safety) remain in the depressed position.

The male attachment elements 31, 32 may be described as 25 mm and/or 40 mm clips.

When the male attachments elements are inserted into the buckle body, the safety and release buttons all return to their original position due to spring elements that are integrated into attachment elements.

The release button is now in the original locked position.

As there are separate spring elements 3, 33 for the safety 22, 23 and release 21 buttons, the pressure required to press the buttons may be varied.

This is to ensure that the safety buttons may be pressed and thus activated with a soft pressure.

Force required to activate the release button down to release the male attachment elements is approximately 35N or 3.5kg.

Force required to activate the safety buttons is approximately 25N or 2.5kg per button.

The buckle may be manufactured from any suitable material, e.g. plastic material or metallic material, such as e.g. steel, stainless steel or aluminium.

The buckle 1 may be made from, at least partly, Polyoxymethylene (POM), since POM has excellent mechanical properties (high stiffness, strength and hardness). It also maintains excellent dimensional stability (maintains its shape and size even under varying temperature and humidity conditions). POM has good chemical resistance as well as low friction properties.

As the buckle may be used in both indoor & outdoor environments, POM is an ideal choice as has good resistance to weathering, UV radiation and outdoor exposure.

The prototyped buckles have to date been 3D printed from Nylon (PA66) and all data and performance described in this document is based on these prototypes & calculations. The final product may preferably be made from POM with much cleaner & smoother surfaces thus forces to press buttons will vary slightly. The performance in terms of smoothness and strength as well as appearance is expected to be much improved in the final manufactured buckles.

But there are several alternative materials to Polyoxymethylene (POM) that may be used for the buckle according to the invention. Likewise any combination of these may also be used.

The choice of material depends on various factors such as cost, mechanical properties, safety, and environmental considerations.

Polypropylene (PP) is a widely used thermoplastic known for its low cost, lightweight nature, and good chemical resistance. It's commonly used in various consumer products, including buckles.

Nylon (Polyamide) is known for its high strength, durability, and resistance to wear and tear. It's often used in applications where toughness and impact resistance are important.

Acetal (Polyoxymethylene, POM), although mentioned as the initial material, can vary in its properties based on different grades, so exploring various POM grades might provide alternatives with slightly different characteristics.

Polyethylene (PE) is another lightweight and low-cost thermoplastic commonly used in various applications where flexibility and chemical resistance are needed.

Polyurethane (PU) is valued for its flexibility and abrasion resistance, making it suitable for applications requiring comfort and flexibility, such as some baby harness components.

Polycarbonate (PC) stands out for its optical clarity and high impact resistance, although it's less common in buckle applications.

ABS (Acrylonitrile Butadiene Styrene) is a versatile thermoplastic with good impact resistance, frequently used in consumer products and potentially suitable for certain buckle components.

When choosing the final material and/or material combination, consideration of the specific requirements of the buckle, including strength, durability, ease of use, and safety will be considered. Ensuring compliance with safety standards and regulations, especially those pertaining to child safety products.

Additionally, the three-way buckle may incorporate other features such as locking tabs, spring mechanisms, or adjustable tensioners to further enhance its functionality and ensure a secure and reliable connection between the straps or webbing.

Overall, the three-way buckle offers a convenient and safe fastening solution, allowing for quick and easy release when required while maintaining a strong and secure connection between the straps or webbing during regular use.

While specific language has been used to describe the present subject matter, any limitations arising on account thereto, are not intended. As would be apparent to a person in the art, various working modifications may be made to the method in order to implement the inventive concept taught herein. The drawings and the foregoing description give examples of embodiments. Those skilled in the art will appreciate that one or more of the described elements may well be combined into a single functional element. Alternatively, certain elements may be split into multiple functional elements, elements from one embodiment may be added to another embodiment.

**List of reference numbers**

| | |
|---|---|
| 1 | Three-way safety buckle |
| 2 | Female housing |
| 3 | Attachment element |
| 20 | Body part |
| 21 | Central release button |
| 22 | Left side safety button |
| 23 | Right side safety button |
| 24 | Left side opening |
| 25 | Right side opening |
| 26 | Main belt slot |
| 27 | Secondary belt slot |
| 28 | Third belt slot |
| 31 | First male attachment element |
| 32 | Second male attachment element |
| 33 | Spring element |
| 34 | Main spring element |
| | |

## Claims

1. A three-way safety buckle (1) with two-step activation comprising;
- a female housing (2) comprising;
a release button (21),
two safety buttons (22, 23) and
two openings (24, 25),
- a first and a second male attachment element (31, 32), adapted to be inserted into the two openings (24, 25) of the female housing (2), and adapted for being releasable connected with the female housing;
wherein said release button (21) and said safety buttons (22, 23) are operatively adapted to release said first and second male attachment elements (31, 32) from connection with the female housing (2), so that when firstly said safety buttons (22, 23) are activated by pressing to allow activation of the release button (21), which is then activated by pressing to release said male attachment elements (31, 32), so that the safety buckle is changed from a locked state to an open state.

2. A three-way safety buckle (1) according to any of the preceding claims, wherein the release button (21) is located centrally on said housing (2), preferably on a front side, to operably engage with the attachment unit (3) within the housing (2).

3. A three-way safety buckle (1) according to any of the preceding claims, wherein the three-way safety buckle in a locked state is adapted to have an ellipsoid-like shape, preferably an oblate spheroid shape.

4. A three-way safety buckle (1) according to any of the preceding claims, wherein the female housing (2) comprises a main belt slot (26) adapted for receiving belt webbing and/or
the first attachment element (31) comprises a secondary belt slot (27) and/or the second attachment element (32) comprises a third belt slot (28), said belt slots (27, 28) being adapted to receive belt webbing.

5. A three-way safety buckle (1) according to any of the preceding claims, wherein the buckle (1) is adapted to require use of two hands so as to be able to activate firstly the safety buttons (22, 23) with a first hand and thereafter activate the release button (21) with a second hand, hereby opening the buckle from the locked state.

6. A three-way safety buckle (1) according to any of the preceding claims, wherein the force required to active the release button (21) is more than 10 N, preferably more than 20 N, more preferred more than 30 N.

7. A three-way safety buckle (1) according to any of the preceding claims, wherein the force required to active the safety button (22) and/or the side safety button (23) is more than 5 N, preferably more than 10 N, more preferred more than 20 N.

8. A three-way safety buckle (1) according to any of the preceding claims, wherein each first and second male attachment element (31, 32) comprises a spring element (33) for releasably engaging with an attachment element (3) inside the housing (2), preferably said attachment element is connected to the side button, so that when the buckle is in the locked state, the attachment element (3) engages with the spring element (33).

9. A three-way safety buckle (1) according to any of the preceding claims, wherein each first and second male attachment element (31, 32) comprises a main spring element (34) for releasably engaging with the release button (21).

10. A method of opening a three-way safety buckle comprising;
- providing a three-way safety buckle (1) according to any of the preceding claims, said buckle being in the assembled locked state,
- activating the two safety buttons (22, 23), by pressing said buttons, with a first hand of a user,
- maintaining the activation of the safety buttons by pressing whilst
- activating the central release button (21), by pressing said button, with a second hand, different from the first hand, of a user,
so as to release the first and the second male attachment elements (31, 32) from the female housing (2), whereby the buckle (1) is changed to the open state.
